# EUROPÄISCHE PATENTSCHRIFT

(11) **EP 0 676 129 B1**
(45) Veröffentlichungstag und Bekanntmachung des Hinweises auf die Patenterteilung: **29.12.1999**
(21) Anmeldenummer: 95104364.5
(22) Anmeldetag: 24.03.1995
(51) Int. Cl.: A01D 69/02, H02G 11/00

(54) **Vorrichtung zum Anschliessen einer beweglichen elektrischen Maschine an das häusliche elektrische Stromnetz**
Device for switching on an electrical, movable machine to the domestic current circuit
Dispositif pour relier une machine électrique mobile au réseau de courant domestique

(30) Priorität: 05.04.1994 DE 9405500 U
(43) Veröffentlichungstag der Anmeldung: 11.10.1995
(73) Patentinhaber: Dipl.-Ing.(FH) LUDWIG BAUMER INGENIEURBÜRO FÜR HAUSTECHNIK, 96052 Bamberg (DE)
(72) Erfinder: Baumer, Ludwig, Dipl.-Ing. (FH), D-96052 Bamberg (DE)
(74) Vertreter: Hufnagel, Walter, Dipl.-Ing., Dipl.-Wirtsch.-Ing.

(56) Entgegenhaltungen:
- DE-A- 3 030 228
- DE-U- 8 620 431
- DE-U- 8 809 901
- US-A- 1 411 584

## Beschreibung

Die Erfindung betrifft eine Vorrichtung zum Anschließen einer beweglichen elektrischen Maschine zur Gartenbearbeitung, beispielsweise eines Rasenmähers, eines Vertikutierers oder einer Bodenfräse, an das häusliche elektrische Stromnetz, wobei ein durchgehendes, einerseits an die Maschine und andererseits an das Stromnetz anschließbares elektrisches Kabel über die Spitze eines im Bereich des zu bearbeitenden Gartens oder Gartenteils aufstellbaren, aus mehreren gleichen Stabteilen zusammengesetzten Stabes geführt ist, dessen Stabteile mittels Hülsen lösbar miteinander verbunden sind und dessen unterster Stabteil in einen im Boden verankerten Einsatz einsteckbar ist.

Aus der DE-OS 30 30 228 ist für einen Rasenmäher eine derartige Vorrichtung bekannt, die einen starren Mast aufweist, der in seinem unteren Bereich mit einem federnden, den Mast in eine aufrechte Stellung selbstrückstellenden Gelenk versehen ist. Bei dieser Vorrichtung kann der Rasenmäher bei einem Mast von etwa 5 m Länge eine Kreisfläche von nur etwa 10 m Durchmesser, also etwa 300 m², überstreichen. Nachteilig ist ferner, daß der lange Mast nur schwierig mit einem Personenkraftwagen zu transportieren ist. Außerdem hat das selbstrückstellende Gelenk ein großes Gewicht und ist nur sehr aufwendig herzustellen.

Aus dem DE-GM 86 20 431 ist für einen Rasenmäher eine ähnliche Vorrichtung bekannt, die eine Kabelleitrute aufweist, bestehend im wesentlichen aus einem im Boden verankerten Grundrohr, einem in das Grundrohr steckbaren Metallrohr und ebenfalls aus einem federnden, das Metallrohr in eine aufrechte Lage selbstrückstellenden Gelenk, sowie ferner aus einer ausziehbaren Rute, die mit dem Metallrohr verbunden und um dieses schwenkbar ist. Zwischen der Rute und dem Metallrohr ist eine bajonettverschlußartige Verbindung mit einer eingebauten elektrischen Schutzkontaktkupplung vorgesehen. Ferner befindet sich etwa in der Mitte des Metallrohres ein Schutzkontaktstecker, über den die Stromzuleitung über ein Verlängerungskabel erfolgt.

Diese bekannte Vorrichtung hat neben dem schweren und teuren Gelenk den Nachteil, daß eine zusätzliche bajonettverschlußartige Verbindung mit einer Schutzkontaktkupplung notwendig ist. Ein weiterer Nachteil besteht darin, daß die Kabelleitrute aus Hohlstäben zusammengesetzt ist, die in sich nicht biegbar sind und deshalb bei einer größeren Biegebelastung einknicken würden. Deshalb benötigt diese bekannte Vorrichtung das schwere und teure selbstrückstellende Gelenk.

Der Erfindung liegt die Aufgabe zugrunde, eine Vorrichtung der eingangs erwähnten Art zu schaffen, die preiswert ist und mit der eine elektrische Maschine trotz eines geringeren Gewichts und einer leichteren Transportierbarkeit der Vorrichtung eine größere Fläche überstreichen kann.

Diese Aufgabe wird mit den Merkmalen des Anspruchs 1 gelöst.

Nach einer vorteilhaften Weiterbildung der Erfindung haben die Stabteile einen Durchmesser von 12 mm bis 15 mm und eine Länge von etwa 1 m.

Zum Befestigen des Kabels an der Spitze des Stabes ist ferner vorgesehen, daß dort ein mit einer aufsteckbaren Hülse versehener Kabelhalter vorzugsweise drehbar anbringbar ist.

Um das elektrische Kabel jederzeit wieder wegräumen zu können, ist nach einer weiteren Ausgestaltung der Erfindung vorgesehen, daß das Kabel an dem einen Ende mit einem Stecker an eine Steckdose des Stromnetzes und an dem anderen Ende mit einer Kupplung an die Maschine anschließbar ist.

Dabei ist es zweckmäßig, daß das zwischen der Spitze des Stabes und dem Stromnetz verlaufende Kabelstück am Stab entlang herunterführbar und mit einer Klemme am unteren Ende des Stabes festklemmbar ist.

Um die unterschiedlichen Flächenformen der zu bearbeitenden Gärten oder Gartenteile zu berücksichtigen, ist nach einer vorteilhaften Ausgestaltung der Erfindung vorgesehen, daß das zwischen der Spitze des Stabes und dem Stromnetz verlaufende Kabelstück über die Spitze eines weiteren, vorzugsweise am Rand des zu bearbeitenden Gartens oder Gartenteils aufstellbaren, vorzugsweise elastischen Stabes oder über eine an einem Gebäudeteil, vorzugsweise in Höhe der Spitze des Stabes angebrachte Haltevorrichtung führbar ist.

Um den Aktionsradius der Maschine zu vergrößern, ist nach einer anderen Weiterbildung der Erfindung vorgesehen, daß das zwischen der Spitze des Stabes und dem Stromnetz verlaufende Kabelstück ebenfalls in Form einer Wendel ausgeführt ist.

Die mit der Erfindung erzielten Vorteile bestehen insbesondere darin, daß die Vorrichtung problemlos transportiert, mit einfacher Handhabung betrieben und durch ihre Variationsmöglichkeiten an jede beliebige Flächenform des zu bearbeitenden Gartens oder Gartenteils angepaßt werden kann. Die bearbeitbare Fläche liegt trotz eines Stabes mit einer Gesamtlänge von nur 3 m in einer ähnlichen Größenordnung wie bei den bekannten Vorrichtungen mit einer Mastgröße von 5 m.

Ein Ausführungsbeispiel der Erfindung ist in der Zeichnung dargestellt und wird im folgenden näher beschrieben. Es zeigen
- Fig. 1: eine Seitenansicht einer erfindungsgemäßen Vorrichtung,
- Fig. 2: einen vergrößerten Ausschnitt aus der Vorrichtung,
- Fig. 3: einen anderen vergrößerten Ausschnitt aus der Vorrichtung,
- Fig. 4: eine Seitenansicht der Vorrichtung in betriebsbereitem Zustand mit einem Rasenmäher,
- Fig. 5: eine Seitenansicht der Vorrichtung mit einem Rasenmäher am Rande der bearbeitbaren Gartenfläche und
- Fig. 6: eine Draufsicht auf die mit der Vorrichtung bearbeitbare Gartenfläche.

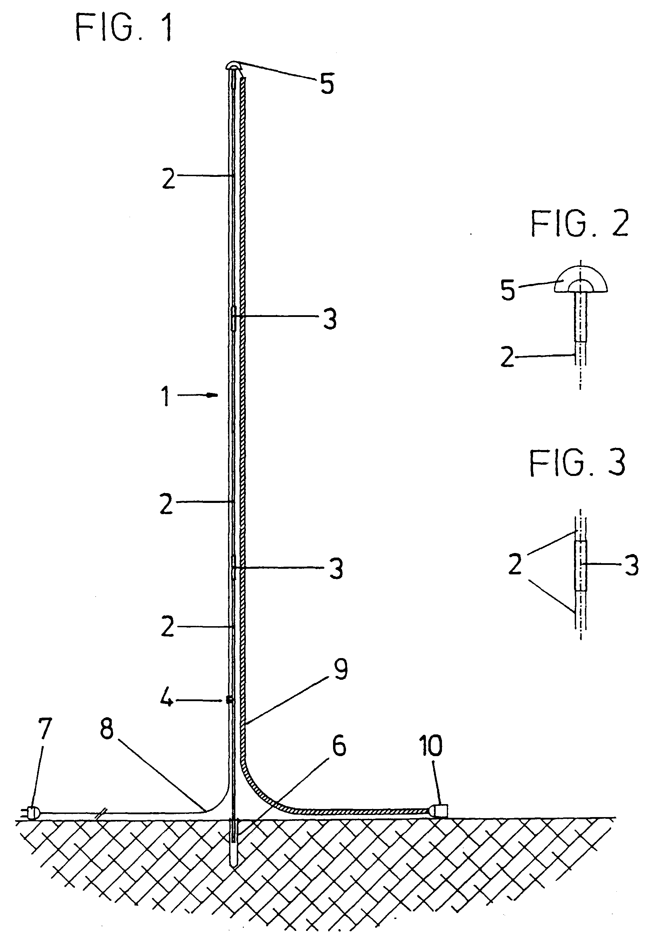

Die Fig. 1 zeigt einen elastischen Stab 1, der aus drei gleichen aus Fiberglas hergestellten elastischen Stabteilen 2 von je beispielsweise 1 m Länge zusammengesetzt ist. Zum Verbinden der Stabteile 2 miteinander dienen vorzugsweise aus Aluminium hergestellte Hülsen 3, in die die Enden der Stabteile 2 eingesteckt sind (Fig. 3). Zum Aufstellen des Stabes 1 dient ein im Boden verankerter hülsenförmiger Einsatz 6, in den das untere Ende des untersten Stabteils 2 eingesteckt ist. Am oberen Ende des obersten Stabteils 2 befindet sich ein Kabelhalter 5, der dort drehbar gelagert ist (Fig. 2).

Über den Kabelhalter 5 ist ein elektrisches Kabel 8, 9 geführt, dessen erstes Kabelstück 8 an dem Stab 1 entlang heruntergeführt und mit einer Klemme 4 am unteren Ende des untersten Stabteils 2 festgeklemmt ist und nach einer bestimmten Mindestlänge an einem Stecker 7 endet, während das zweite Kabelstück 9 in Form einer Wendel ausgeführt ist und an einer Kupplung 10 endet.

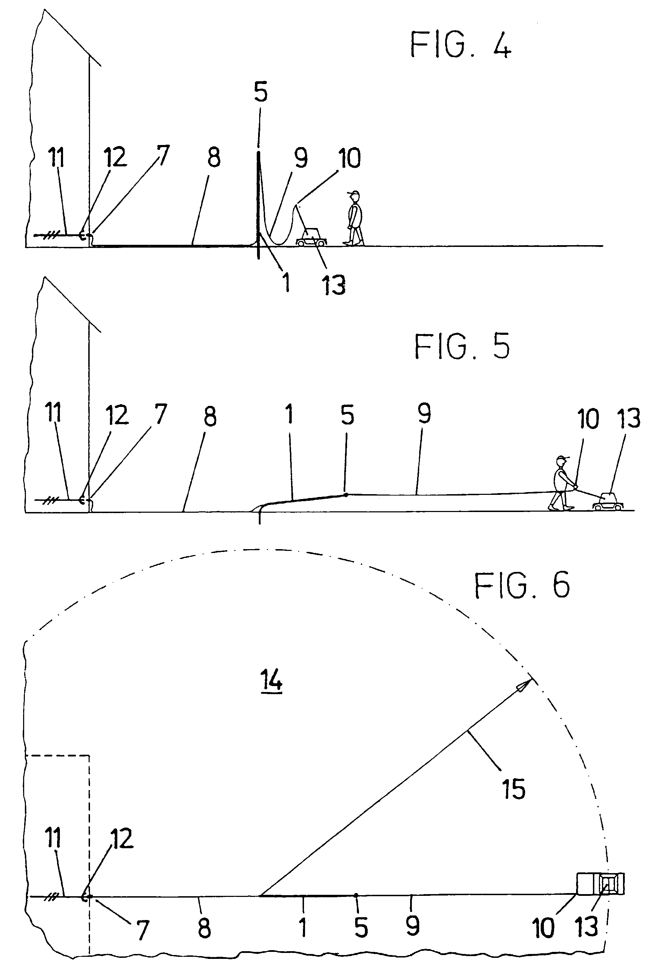

In den Figuren 4 bis 6 ist dargestellt, wie die Vorrichtung für den Betrieb einer elektrischen Maschine 13, beispielsweise eines Rasenmähers, verwendet werden kann.

Der an dem ersten Kabelstück 8 angebrachte Stecker 7 ist in eine Steckdose 12 des häuslichen Stromnetzes 11 eingesetzt, während die an dem zweiten Kabelstück 9 angebrachte Kupplung 10 an einen entsprechenden Stecker der Maschine 13 angeschlossen ist (Fig. 4).

Fig. 5 zeigt, wie der elastische Stab 1 abgebogen und das gewendelte Kabelstück 9 auseinandergezogen ist, wenn die Maschine 13 sich am Rande des bearbeitbaren Gartenteils 14 befindet. Bei einer Länge von 3 m beschreibt die Spitze des abgebogenen Stabes 1 einen Kreis mit einem Durchmesser von etwa 2,8 m. Das gewendelte Kabelstück 9 mit einer Länge von 3,5 m erreicht im ausgezogenen Zustand eine Länge von etwa 7 m. Mit einer Maschine 13 mit einer Schubstange von 1 m Länge wird somit ein Aktionsradius 15 von etwa 10,8 m erreicht, so daß der bearbeitbare Gartenteil 14 eine Größe von etwa 366 m² hat (Fig. 6).

## Patentansprüche

1. Vorrichtung zum Anschließen einer beweglichen elektrischen Maschine (13) zur Gartenbearbeitung, beispielsweise eines Rasenmähers, eines Vertikutierers oder einer Bodenfräse, an das häusliche elektrische Stromnetz (11), wobei ein durchgehendes, einerseits an die Maschine (13) und andererseits an das Stromnetz (11) anschließbares elektrisches Kabel (8, 9) über die Spitze eines im Bereich des zu bearbeitenden Gartens oder Gartenteils (14) aufstellbaren, aus mehreren gleichen Stabteilen (2) zusammengesetzten Stabes (1) geführt ist, dessen Stabteile (2) mittels Hülsen (3) lösbar miteinander verbunden sind und dessen unterster Stabteil (2) in einen im Boden verankerten Einsatz (6) einsteckbar ist, dadurch gekennzeichnet, daß die Stabteile (2) aus Fiberglas bestehen und bei einer durch die von dem Stab (1) wegbewegte Maschine (13) hervorgerufenen Zugbelastung bis zu einer nahezu waagerechten Lage elastisch verbiegbar sind und daß das zwischen der Spitze des Stabes (1) und der Maschine (13) verlaufende Kabelstück (9) in Form einer Wendel ausgeführt ist, die ihre Länge bei der erwähnten Zugbelastung wesentlich erhöht.

2. Vorrichtung nach Anspruch 1, dadurch gekennzeichnet, daß die Stabteile (2) einen Durchmesser von 12 mm bis 15 mm und eine Länge von etwa 1 m haben.

3. Vorrichtung nach einem der Ansprüche 1 oder 2, dadurch gekennzeichnet, daß an der Spitze des Stabes (1) ein mit einer aufsteckbaren Hülse versehener Kabelhalter (5) drehbar angebracht ist.

4. Vorrichtung nach einem der Ansprüche 1 bis 3, dadurch gekennzeichnet, daß das Kabel (8, 9) an dem einen Ende mit einem Stecker (7) an eine Steckdose (12) des Stromnetzes (11) und an dem anderen Ende mit einer Kupplung (10) an die Maschine (13) anschließbar ist.

5. Vorrichtung nach einem der Ansprüche 1 bis 4, dadurch gekennzeichnet, daß das zwischen der Spitze des Stabes (1) und dem Stromnetz (11) verlaufende Kabelstück (8) am Stab (1) entlang heruntergeführt und mit einer Klemme (4) am unteren Ende des Stabes (1) festgeklemmt ist.

6. Vorrichtung nach einem der Ansprüche 1 bis 5, dadurch gekennzeichnet, daß das zwischen der Spitze des Stabes (1) und dem Stromnetz (11) verlaufende Kabelstück (8) über die Spitze eines weiteren, am Rand des zu bearbeitenden Gartens oder Gartenteils (14) aufstellbaren Stabes (1) geführt ist.

7. Vorrichtung nach einem der Ansprüche 1 bis 6, dadurch gekennzeichnet, daß das zwischen der Spitze des Stabes (1) und dem Stromnetz (11) verlaufende Kabelstück (8) über eine an einem Gebäudeteil angebrachte Haltevorrichtung geführt ist.

8. Vorrichtung nach einem der Ansprüche 1 bis 7, dadurch gekennzeichnet, daß das zwischen der Spitze des Stabes (1) und dem Stromnetz (11) verlaufende Kabelstück (8) ebenfalls in Form einer Wendel ausgeführt ist.

## Claims

1. Device for connection of a mobile electrical machine (13) for gardening, for example a lawn mower, a scarifier or a rotary cultivator, to the domestic electricity supply (11), for which a continuous electrical cable (8, 9) connectable firstly to the machine (13) and secondly to the power supply (11) is passed over the tip of a rod (1) which is composed of a plurality of identical rod sections (2) and can be erected in the area of the garden or garden part (14) to be worked on, the rod sections (2) of which are connected to one another detachably by means of sleeves (3) and the lowest rod section (2) of which can be plugged into an insert (6) anchored in the ground, characterized in that the rod sections (2) are made of fibreglass and can be bent elastically to an almost horizontal position when under a tensile load caused by the machine (13) moved away from the rod (1) and in that the length of cable (9) running between the tip of the rod (1) and the machine (13) takes the form of a coil which greatly increases its length when under the mentioned tensile load.

2. Device according to claim 1, characterised in that the rod sections (2) have a diameter of 12 mm to 15 mm and a length of approximately 1 m.

3. Device according to one of claims 1 or 2, characterised in that a cable holder (5) provided with a plug-on sleeve is attached pivotably to the tip of the rod (1).

4. Device according to one of claims 1 to 3, characterised in that the cable (8, 9) can be connected at one end by a plug (7) to a socket (12) of the power supply (11) and at the other end by a coupling (10) to the machine (13).

5. Device according to one of claims 1 to 4, characterised in that the length of cable (8) running between the tip of the rod (1) and the power supply (11) is run down along the rod (1) and clamped securely with a clamp (4) at the lower end of the rod (1).

6. Device according to one of claims 1 to 5, characterised in that the length of cable (8) running between the tip of the rod (1) and the power supply (11) is guided over the tip of a further rod (1) which can be erected at the edge of the garden or garden part (14) to be worked on.

7. Device according to one of claims 1 to 6, characterised in that the length of cable (8) running between the tip of the rod (1) and the power supply (11) is guided over a holding device attached to a building part.

8. Device according to one of claims 1 to 7, characterised in that the length of cable (8) running between the tip of the rod (1) and the power supply (11) also takes the form of a coil.

## Revendications

1. Dispositif pour raccorder une machine électrique mobile (13) pour le travail du jardin, par exemple une tondeuse, une machine d'aération ou une fraise sur le réseau électrique domestique (11), selon lequel on fait passer un câble électrique (8, 9), continu, raccordé d'une part à la machine (13) et d'autre part au réseau électrique (11) sur la pointe d'une tige (1), composé de plusieurs parties (2), et qui est installé dans le jardin ou la partie de jardin (14) à travailler, les parties de tige (2) étant reliées de façon amovible par des manchons (3) et la partie de tige (2), inférieure, est engagée dans un élément (6) accroché au sol,
caractérisé en ce que
- les parties de tige (2) sont en fibres de verre et en cas de traction exercée sur la tige (1) par la machine (13) qui se déplace, les tiges peuvent se déformer élastiquement jusqu'à une position pratiquement horizontale, et
- la partie de câble (9), comprise entre la pointe de la tige (1) et la machine (13), est réalisée sous la forme d'une spire dont la longueur augmente de manière importante sous l'effet de la traction évoquée.

2. Dispositif selon la revendication 1,
caractérisé en ce que
les parties de tige (2) ont un diamètre de 12 mm-15 mm et une longueur d'environ 1 m.

3. Dispositif selon l'une des revendications 1 ou 2,
caractérisé en ce que
la pointe de la tige (1) reçoit à rotation un porte-câble (5) muni d'un manchon enfichable.

4. Dispositif selon l'une des revendications 1 à 3,
caractérisé en ce que
le câble (8, 9) est muni à une extrémité d'un connecteur mâle (7) pour être branché à une prise (12) du réseau électrique (11) et à l'autre extrémité, d'un connecteur femelle (10) pour être raccordé à la machine (13).

5. Dispositif selon l'une des revendications 1 à 4,
caractérisé en ce que
la partie de câble (8), comprise entre la pointe de la tige (1) et le réseau électrique (11), passe le long de la tige (1) et est fixée avec une pince (4) sur l'extrémité inférieure de la tige (1).

6. Dispositif selon l'une des revendications 1 à 5,
caractérisé en ce que
le morceau de câble (8), compris entre la pointe de la tige (1) et le réseau électrique (11) passe sur la pointe d'une autre tige (1) disposée au bord du jardin ou de la partie de jardin (14) à travailler.

7. Dispositif selon l'une des revendications 1 à 6,
caractérisé en ce que
la partie de câble (8) qui passe entre la pointe de la tige (1) et le réseau électrique (11) passe sur un dispositif de fixation rapporté sur une partie d'immeuble.

8. Dispositif selon l'une des revendications 1 à 7,
caractérisé en ce que
la partie de câble (8), qui passe entre la pointe de la tige (1) et le réseau électrique (11), est éventuellement réalisé sous la forme d'un enroulement.
